# FASCICULE DE BREVET EUROPEEN

(11) **EP 2 257 777 B1**
(45) Date de publication et mention de la délivrance du brevet: **16.11.2011**
(21) Numéro de dépôt: 09754049.6
(22) Date de dépôt: 24.03.2009
(51) Int. Cl.: G01G 23/32, G01G 19/44

(54) **APPAREIL DE PESAGE AVEC AFFICHAGE PROJETE**
WIEGEVORRICHTUNG MIT PROJEKTIONSANZEIGE
WEIGHING DEVICE WITH PROJECTION DISPLAY

(30) Priorité: 28.03.2008 FR 0801708
(43) Date de publication de la demande: 08.12.2010
(73) Titulaire: SEB S.A., 69130 Ecully (FR)
(72) Inventeur: LINGLIN, Benoît, F-74350 Cruseilles (FR)
(74) Mandataire: Guéry-Jacques, Géraldine
(86) Numéro de dépôt international: PCT/FR2009/000318
(87) Numéro de publication internationale: WO 2009/144399

(56) Documents cités:
- FR-A- 2 797 706
- JP-A- 2005 010 100
- US-A- 2 937 862
- US-A1- 2003 010 543

## Description

La présente invention concerne un appareil de pesage électronique, plus particulièrement un pèse-personne électronique ou une balance de ménage.

Les appareils du type précité comportent généralement un plateau équipé de pieds, un dispositif de mesure du poids présent sur le plateau comprenant un afficheur à cristaux liquides pour afficher le poids mesuré, l'afficheur étant disposé vers l'avant du plateau.

Avec ce type d'appareils, l'utilisateur a souvent des problèmes pour lire facilement le poids mesuré, du fait de la faible taille de l'afficheur et du fait de la distance importante entre les yeux de l'utilisateur et l'afficheur. De plus, dans le cas d'un utilisateur de forte corpulence souhaitant se peser, celui-ci est obligé de se pencher en avant pour lire l'afficheur situé devant ses pieds.

Pour résoudre ces problèmes, certains appareils utilisent un affichage déporté dans un boîtier indépendant du plateau et relié au dispositif de mesure du poids par une liaison avec ou sans fil. Dans le cas d'appareils sans fil, par exemple par liaison infra rouge, ceci implique une mise en regard de l'émetteur et du récepteur contraignante et qui nécessite une alimentation par piles de l'émetteur et du récepteur, et présente donc l'inconvénient d'avoir un coût de fabrication très élevé.

On connaît du document US 6541714 un pèse-personne comportant un dispositif de mesure du poids et un projecteur holographique qui projette devant l'utilisateur, à mi-hauteur de ce dernier, une image du poids mesuré. Toutefois, la lecture d'une telle image projetée demande une accoutumance aux yeux de l'utilisateur qui est obligé de faire un effort particulièrement inconfortable. De plus, l'utilisation d'un projecteur holographique fait que ce type d'appareil est très cher et très compliqué à réaliser.

Le but de la présente invention est de remédier aux inconvénients précités et de proposer un appareil qui permette à l'utilisateur de lire facilement et sans effort le poids mesuré et qui est simple et économique à mettre en oeuvre.

Un autre but de l'invention est de permettre à un utilisateur de lire le poids mesuré quelle que soit sa corpulence ou son acuité visuelle.

Ces buts sont atteints avec un pèse-personne électronique comportant un plateau équipé de pieds reposant sur le sol, un dispositif de pesage pour mesurer le poids d'une personne montée sur le plateau relié à un dispositif d'affichage du poids mesuré **caractérisé en ce que** ledit dispositif d'affichage comporte des moyens de projection coopérant avec un afficheur à cristaux liquides transmissif et prévus pour projeter l'image représentative du poids mesuré, sur une surface de projection à travers ledit afficheur.

Selon l'invention, l'utilisation de moyens de projection de l'image du poids mesuré permet d'obtenir des grands caractères sur la surface de projection qui sont facilement lisibles par l'utilisateur.

De plus, associer un afficheur à cristaux liquides à des moyens de projection permet d'obtenir un afficheur d'une surface faible. En sachant que le coût de l'afficheur est proportionnel à sa surface, on obtient un dispositif d'affichage très économique.

Avantageusement, les moyens de projection comportent au moins un composant d'émission de lumière et une lentille optique.

Cette disposition permet de réaliser des moyens de projection très économiques à partir de composants simples du commerce.

De préférence, le composant d'émission de lumière est formé par au moins une diode électro luminescente.

Cette disposition permet de réaliser une source lumineuse économique qui consomme peu et qui offre de multiples possibilités de couleur.

Avantageusement, le composant d'émission de lumière est formé par au moins une diode laser.

Cette disposition permet, à l'aide de la puissance lumineuse de la diode laser, d'avoir une projection du poids mesuré sur la surface de projection très lisible, avec une très bonne luminosité.

De préférence, la surface de projection est située à l'avant du pèse-personne, dans le prolongement du plateau.

Le dispositif d'affichage projette l'image du résultat de la mesure sur une surface déportée du plateau, devant l'appareil, permettant à une personne de forte corpulence de lire le poids sans se pencher.

Avantageusement, la surface de projection appartient à un écran qui est mobile par rapport au plateau dans une direction parallèle au plan du plateau, entre une position rentrée dans le plateau et au moins une position sortie devant le plateau.

Cette disposition permet d'obtenir un pèse-personne compact dans le cas où la surface de projection est en position rentrée dans le plateau pour le stockage de l'appareil ou pour une utilisation identique à un pèse-personne avec affichage intégré au plateau.

De plus, cette disposition permet à l'utilisateur de positionner l'affichage du poids de façon déportée de l'avant du plateau, à sa convenance pour pouvoir lire le poids mesuré sans effort.

Avantageusement, le dispositif d'affichage du poids mesuré et la surface de projection forment un ensemble mobile par rapport au plateau dans une direction longitudinale.

Cette disposition permet d'obtenir un affichage net quelle que soit la position de la surface de projection, la distance entre le dispositif d'affichage et la surface de projection étant fixe. Ainsi, l'utilisateur n'a pas de réglage de netteté à effectuer.

Selon un autre mode de réalisation, la surface de projection située à l'avant du pèse-personne est formée par le sol.

Ce mode de réalisation permet de réaliser un pèse-personne très économique, sans ajouter de pièce pour réaliser la surface de projection. Une projection sur le sol, à une distance fixe des moyens de projections, permet également de ne pas avoir de réglage de netteté. De plus, le pèse-personne reste compact et facilement utilisable dans une petite pièce.

Il est également possible d'envisager une projection sur toutes autres surfaces (mur, plinthes ...). Dans ce cas, il est nécessaire de rendre les moyens de projections mobiles pour obtenir un réglage de la netteté de l'image du poids projeté.

Dans une autre variante de réalisation, la surface de projection est située à l'intérieur du plateau.

Cette variante de réalisation permet de garder un pèse personne compact, tout en ayant un bon confort de lecture.

Avantageusement, le plateau comporte une zone translucide munie d'une face supérieure dépolie et ladite face supérieure dépolie forme la surface de projection.

Par zone translucide, on comprend une zone qui peut être limitée à la surface de l'image du poids projetée mais cette zone translucide peut s'étendre à tout le plateau.

La face dépolie est la face supérieure du plateau pour éviter les reflets de la lumière extérieure.

De préférence, l'image du poids mesuré projetée sur la surface de projection est formée par des caractères d'une hauteur minimum comprise entre 2 et 5 cm, de préférence 3 cm.

Cette disposition permet d'obtenir un affichage du poids mesuré avec de gros caractères, lisible sans effort particulier par l'utilisateur.

L'invention sera mieux comprise à l'étude des modes de réalisation pris à titre nullement limitatif et illustrés dans les figures annexées dans lesquelles :
- La figure 1 est une vue schématique en perspective d'un pèse-personne selon l'invention.
- La figure 2 illustre une vue en coupe II-II du pèse-personne de la figure 1.
- La figure 3 est une vue en coupe II-II du pèse-personne de la figure 1, l'ensemble mobile formé par les moyens de projection du poids mesuré et la surface de projection étant en position rentrée dans le plateau.
- La figure 4 illustre une vue de l'ensemble mobile du pèse-personne de la figure 1.
- La figure 5 illustre une vue schématique en coupe d'un pèse-personne selon un deuxième mode de réalisation de l'invention.
- La figure 6 illustre une vue schématique en coupe d'un pèse-personne selon un troisième mode de réalisation de l'invention.

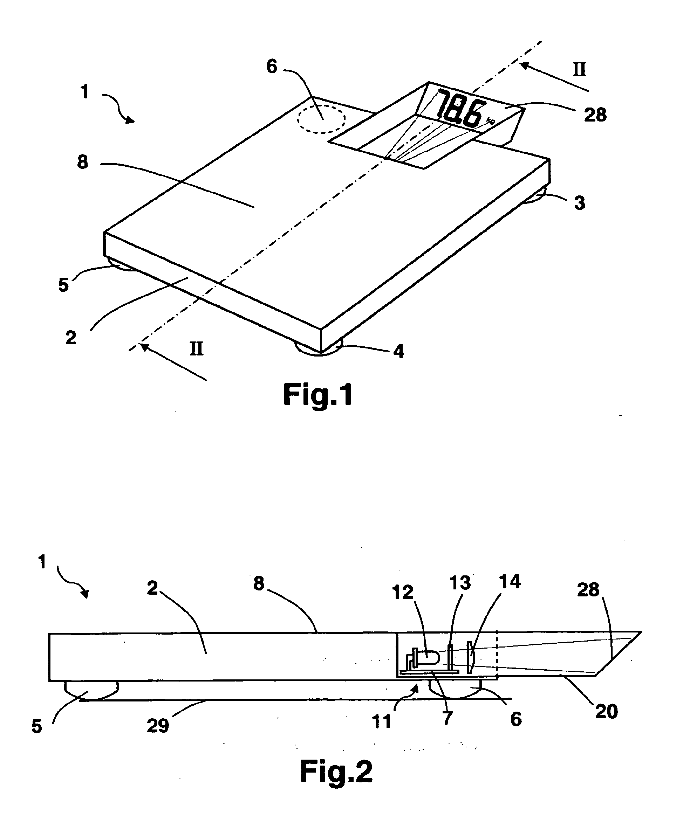

Tel que visible aux figures 1 et 2, le pèse-personne 1 électronique réalisé conformément à l'invention comporte un plateau 2 de forme générale parallélépipédique équipé à chacun de ses coins de quatre pieds 3, 4, 5, 6 qui reposent sur le sol 29, un dispositif de pesage pour mesurer le poids d'une personne montée sur le plateau 2 et un dispositif d'affichage du poids mesuré. Le dispositif d'affichage comporte un afficheur à cristaux liquides 13 transmissif et des moyens de projection 11 de l'image représentative du poids mesuré sur une surface de projection 28, située à l'avant du pèse-personne 1, dans le prolongement du plateau 2.

Le plateau 2 supporte le dispositif de pesage (non détaillé sur les figures) qui comporte un circuit électronique 7 alimenté par des batteries et quatre capteurs assemblés dans le plateau en face de chaque pied. Les capteurs comprennent des jauges de contraintes reliées au circuit électronique 7 par des câblages. Lors d'une pesée, les jauges de contraintes émettent un signal électrique vers le circuit électronique 7 qui calcule alors le poids et l'affiche sur la surface de projection 28 à l'aide du dispositif d'affichage.

Tel que visible sur les figures 2 à 4, le dispositif d'affichage comporte l'afficheur à cristaux liquides 13 transmissif. Une image du poids mesuré est formée sur l'afficheur à cristaux liquides 13 par des caractères 17 eux-mêmes composés de digits 18. Le circuit électronique 7 commande, par un signal électrique, chaque digit formant les caractères du poids mesuré, pour les rendre translucides, le reste de la surface de l'afficheur restant opaque. Les moyens de projection 11 comportent une diode 12 électro luninescente émettant un faisceau lumineux vers l'afficheur à cristaux liquides 13, qui traverse les digits translucides pour former une image représentative du poids mesuré, projetée vers une lentille optique 14. Cette lentille optique 14 est apte à amplifier et corriger cette image qui est reconstituée sur une surface de projection 28 inclinée vers le haut, vers les yeux de l'utilisateur.

La surface de projection 28 est agencée à une distance de la lentille optique 14 de manière à grossir l'image représentative du poids mesuré pour que les caractères 17 aient une hauteur minimum comprise entre 2 et 5 cm, de préférence 3 cm.

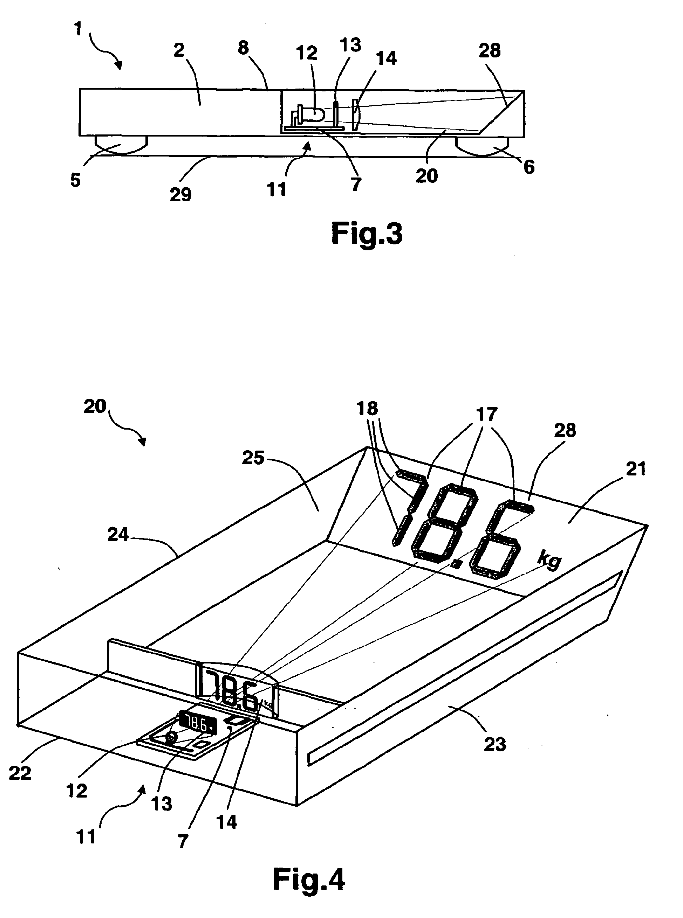

Le dispositif d'affichage et la surface de projection 28 forment un ensemble mobile 20 (fig 4) par rapport au plateau 2 dans une direction longitudinale. Cet ensemble est constitué par un tiroir 20 comportant un fond 22 qui supporte le dispositif d'affichage et une paroi avant 21 qui forme la surface de projection 28. La paroi avant 21 a une surface comportant un léger grainage pour éviter les reflets. Le tiroir 20 comporte également deux parois latérales 23, 24 munies de glissières coopérant avec le plateau 2 et une paroi supérieure 25 translucide permettant la lecture du poids sur la surface de projection 28, tout en protégeant cette surface et le dispositif d'affichage.

Dans une variante simplifiée de réalisation, le tiroir 20 ne comporte pas de paroi supérieure translucide 25 et ne comporte pas de fond 22.

Le tiroir 20 est mobile en translation dans le plateau 2 dans une direction parallèle au plan du plateau, entre une position rentrée (fig 3) permettant le stockage du pèse-personne 1 et une position sortie (fig 2) permettant de déporter la surface de projection 28 pour faciliter la lecture du poids à un utilisateur de forte corpulence. A titre d'exemple, la distance entre le bord du plateau 2 et la surface de projection 28 est comprise entre 10 et 30 cm, de préférence 20 cm.

Entre la position rentrée et la position sortie, le tiroir 20 peut prendre toute autre position pour s'adapter au désir de l'utilisateur ou s'adapter à l'encombrement de la pièce dans laquelle est posé le pèse-personne 1. La position des moyens de projection 11, de l'afficheur à cristaux liquides 13 et de la surface de projection 28 étant fixe, l'utilisateur n'a aucun réglage de netteté à effectuer lors du déplacement du tiroir 20.

Le plateau 2 comporte une face supérieure 8 sous laquelle se glisse le tiroir 20 vers la position rentrée.

De manière avantageuse, dans une variante de réalisation, la diode 12 électro luminescente peut être remplacée par une diode laser, ce qui permet de lire le poids affiché dans des conditions d'éclairement importantes, par exemple sous une fenêtre de toit ou sous un éclairage de forte puissance.

Avantageusement, les composants du dispositif d'affichage, à savoir entre autre la diode 12, l'afficheur à cristaux liquides 13 et la lentille 14 sont montés directement sur le même circuit électronique 7 que celui du dispositif de pesage.

En fonctionnement, si le pèse-personne 1 n'est pas déjà en position d'utilisation sur le sol, l'utilisateur prend le pèse-personne 1 de son lieu de stockage. Il déplace en translation le tiroir 20 afin d'amener la surface de projection 28 à l'avant du plateau 2, dans une position qui lui permettra une bonne vision, en fonction de sa corpulence et le pose sur le sol. Il monte ensuite sur le plateau et le dispositif de pesage réalise la mesure du poids. Pour terminer, le dispositif d'affichage projette le poids mesuré sur la surface de projection 28.

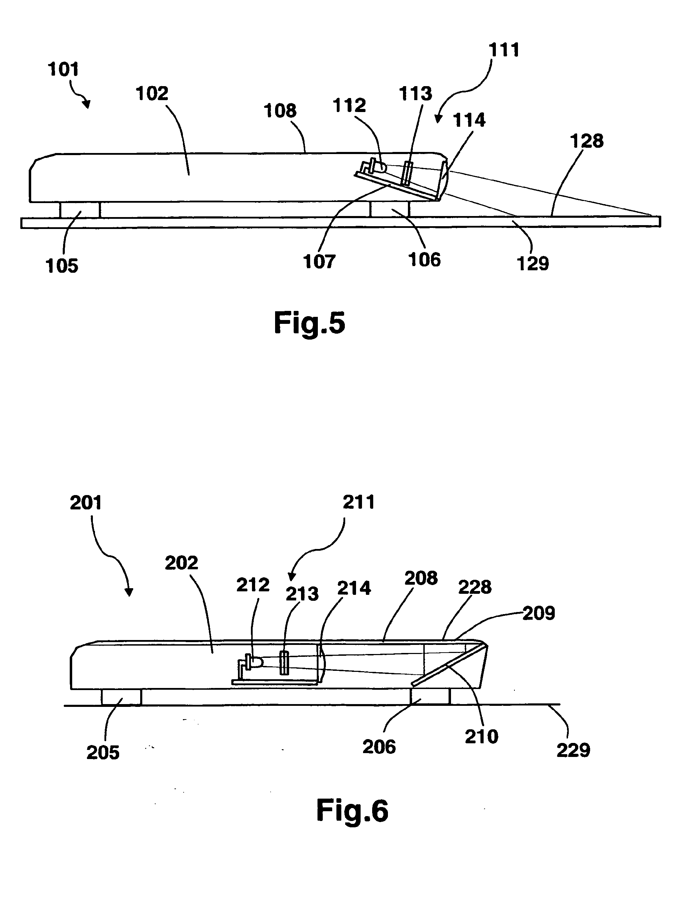

La figure 5 illustre un deuxième mode de réalisation de l'invention. Un pèse-personne 101 comporte un plateau 102 muni d'une face supérieure 108, équipé à chacun de ses coins de quatre pieds (seuls les pieds 105, 106 étant visibles sur la figure 5) qui reposent sur le sol 129, un dispositif de pesage pour mesurer le poids d'une personne montée sur le plateau 102 et un dispositif d'affichage du poids mesuré. Ce dispositif est agencé vers l'avant du plateau 202, sous la face supérieure 108 et comporte un afficheur à cristaux liquides 113 transmissif et des moyens de projection 111 de l'image représentative du poids mesuré sur une surface de projection 128 formée par le sol 129, à l'avant du pèse-personne 101, dans le prolongement du plateau 102.

Les moyens de projection 111 comportent une diode 112 électro luninescente émettant un faisceau lumineux traversant l'afficheur à cristaux liquides 113 vers une lentille optique 114. Le dispositif d'affichage comporte un circuit électronique 107 qui est agencé de manière inclinée par rapport au plateau 102.

L'afficheur à cristaux liquides 113 et la lentille optique 114 sont adaptés pour corriger les déformations de l'image du poids sur le sol 129, liées à l'angle de projection.

A titre d'exemple, pour une hauteur de projection située à l'axe de la lentille optique 114 de 4 cm, pour un angle de projection de 22° et pour une distance entre la lentille optique 114 et le centre de l'image projetée de 12 cm, on obtient une hauteur de caractère sur le sol 129 de 5 cm. L'afficheur à cristaux liquides 113 a quant à lui une hauteur de 1 cm.

La figure 6 illustre un troisième mode de réalisation de l'invention. Un pèse-personne 201 comporte un plateau 202, équipé à chacun de ses coins de quatre pieds (seuls les pieds 205, 206 étant visibles sur la figure 6) qui reposent sur le sol 229, un dispositif de pesage pour mesurer le poids d'une personne montée sur le plateau 202 et un dispositif d'affichage du poids mesuré. Le plateau 202 est muni d'une plaque supérieure 208 en verre dont la face supérieure 209 est dépolie. Le dispositif d'affichage est agencé sous la plaque en verre 208 du plateau 202, et comporte un afficheur à cristaux liquides 213 transmissif et des moyens de projection 211 de l'image représentative du poids mesuré sur une surface de projection 228 formée par la face supérieure 209 dépolie, à l'aide d'un miroir 210. De manière avantageuse, la surface de projection est située vers l'avant du plateau 202.

Les moyens de projection 211 comportent une diode 212 électro luninescente émettant un faisceau lumineux traversant l'afficheur à cristaux liquides 213 vers une lentille optique 214.

A titre d'exemple, pour une distance entre la lentille optique 214 et le centre du miroir 210 de 12 cm et pour un afficheur à cristaux liquides 213 d'une hauteur de 1 cm, on obtient une hauteur de caractère sur la surface de projection 228 de 2 cm.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, la surface de projection formée par la paroi avant du tiroir peut être de forme convexe.

Dans une variante de réalisation, la surface de projection peut être formée par un écran agencé de manière pivotante par rapport au plateau entre une position repliée de stockage et au moins une position d'utilisation, dépliée devant le plateau.

Dans une autre variante de construction, il est possible d'adjoindre une lentille optique complémentaire, dite lentille de champ, entre le composant d'émission de lumière (diode électroluminescente ou diode laser) et ayant pour rôle de récupérer un maximum de l'énergie lumineuse issue du composant d'émission de lumière. Avantageusement cette lentille de champ pourra être moulée en même temps que la première lentille optique.

Dans une autre variante de réalisation, la position des moyens de projection par rapport à la surface de projection est réglable par l'utilisateur pour adapter la netteté de l'image du poids mesuré, et ainsi permettre une projection ailleurs qu'au sol par exemple sur un mur ou sur une plinthe.

## Revendications

1. Pèse-personne (1, 101, 201) électronique comportant un plateau (2, 102, 202) équipé de pieds (3, 4, 5, 6, 105, 106, 205, 206) reposant sur le sol (29, 129, 229), un dispositif de pesage pour mesurer le poids d'une personne montée sur le plateau relié à un dispositif d'affichage du poids mesuré **caractérisé en ce que** ledit dispositif d'affichage comporte des moyens de projection (11, 111,211) coopérant avec un afficheur à cristaux liquides (13, 113, 213) transmissif et prévus pour projeter l'image représentative du poids mesuré, sur une surface de projection (28,128, 228) à travers ledit afficheur.

2. Pèse-personne (1, 101, 201) électronique selon la revendication 1, **caractérisé en ce que** les moyens de projection (11, 111,211) comportent au moins un composant d'émission de lumière (12, 112, 212) et une lentille optique (14,114,214).

3. Pèse-personne (1, 101, 201) électronique selon la revendication 2, **caractérisé en ce que** le composant d'émission de lumière est formé par au moins une diode (12, 112, 212) électro luminescente.

4. Pèse-personne (1, 101, 201) électronique selon la revendication 2, **caractérisé en ce que** le composant d'émission de lumière est formé par au moins une diode laser.

5. Pèse-personne (1, 101) électronique selon l'une quelconque des revendications 1 à 4, **caractérisé en ce que** la surface de projection (28,128) est située à l'avant du pèse-personne (1,101), dans le prolongement du plateau (2, 102).

6. Pèse-personne (1) électronique selon l'une quelconque des revendications 1 à 5, **caractérisé en ce que** la surface de projection (28) appartient à un écran qui est mobile par rapport au plateau (2) dans une direction parallèle au plan du plateau, entre une position rentrée dans le plateau (2) et au moins une position sortie devant le plateau (2).

7. Pèse-personne (1) électronique selon l'une quelconque des revendications 1 à 6, **caractérisé en ce que** le dispositif d'affichage du poids mesuré et la surface de projection (28) forment un ensemble mobile (20) par rapport au plateau (2) dans une direction longitudinale.

8. Pèse-personne (101) électronique selon l'une quelconque des revendications 1 à 5, **caractérisé en ce que** la surface de projection (128) située à l'avant du pèse-personne (101) est formée par le sol (129).

9. Pèse-personne (201) électronique selon l'une quelconque des revendications 1 à 4, **caractérisé en ce que** la surface de projection (228) est située à l'intérieur du plateau (202).

10. Pèse-personne (201) électronique selon la revendication 9, **caractérisé en ce que** le plateau (202) comporte une zone translucide munie d'une face supérieure dépolie (208) et que ladite face supérieure dépolie (208) forme la surface de projection (228).

11. Pèse-personne (1, 101, 201) électronique selon l'une quelconque des revendications 1 à 10, **caractérisé en ce que** l'image du poids mesuré projetée sur la surface de projection (28, 128, 228) est formée par des caractères (17) d'une hauteur minimum comprise entre 2 et 5 cm, de préférence 3 cm.

## Claims

1. An electronic bathroom scale (1, 101, 201) comprising a plate (2, 102,202) provided with legs (3, 4, 5, 6, 105, 106, 205, 206) resting on the floor (29, 129, 229), a weighing device for measuring the weight of a person standing on the plate connected to a device for displaying the measured weight, **characterised in that** said display device comprises a projection means (11, 111,211) which interacts with a transmissive liquid crystal display (13, 113, 213) and is designed to project the representative image of the measured weight on a projection surface (28, 128, 228) via said display.

2. An electronic bathroom scale (1, 101, 201) according to claim 1, **characterised in that** the projection means (11,111, 211) comprises at least one light emitting component (12, 112, 212) and an optical lens (14, 114, 214).

3. An electronic bathroom scale (1, 101, 201) according to claim 2, **characterised in that** the light emitting component consists of at least one light emitting diode (12,112,212).

4. An electronic bathroom scale (1, 101, 201) according to claim 2, **characterised in that** the light emitting component consists of at least one laser diode.

5. An electronic bathroom scale (1, 101) according to any one of claims 1 to 4, **characterised in that** the projection surface (28, 128) is located on the front of the bathroom scale (1, 101), in the extension of the plate (2, 102).

6. An electronic bathroom scale (1) according to any one of claims 1 to 5, **characterised in that** the projection surface (28) belongs to a screen which is mobile with respect to the plate (2) in a direction parallel to the plane of the plate, between a retracted position within the plate (2) and at least one extended position in front of the plate (2).

7. An electronic bathroom scale (1) according to any one of claims 1 to 6, **characterised in that** the device for displaying the measured weight and the projection surface (28) form a mobile assembly (20) with respect to the plate (2) in a longitudinal direction.

8. An electronic bathroom scale (101) according to any one of claims 1 to 5, **characterised in that** the projection surface (128) located on the front of the bathroom scale (101) is formed by the floor (129).

9. An electronic bathroom scale (201) according to any one of claims 1 to 4, **characterised in that** the projection surface (228) is located inside the plate (202).

10. An electronic bathroom scale (201) according to claim 9, **characterised in that** the plate (202) comprises a translucent zone with a frosted upper face (208) and that said frosted upper face (208) forms the projection surface (228).

11. An electronic bathroom scale (1, 101, 201) according to any one of claims 1 to 10, **characterised in that** the image of the measured weight projected onto the projection surface (28, 128, 228) consists of characters (17) with a minimum height between 2 and 5 cm, preferably 3 cm.

## Patentansprüche

1. Elektronische Personenwaage (1, 101, 201), umfassend eine Platte (2, 102, 202), die mit Füßen (3, 4, 5, 6, 105, 106, 205, 206) ausgestattet ist, die auf dem Boden (29, 129, 229) aufliegen, eine Wegevorrichtung zum Messen des Gewichts einer auf die Platte gestiegenen Person, verbunden mit einer Anzeigevorrichtung für das gemessene Gewicht, **dadurch gekennzeichnet, dass** die Anzeigevorrichtung Projektionsmittel (11, 111, 211) umfasst, die mit einer transmissiven Flüssigkristallanzeige (13, 113, 213) zusammenwirken und vorgesehen sind, um das Bild, das für das gemessene Gewicht bezeichnend ist, durch die Anzeige auf eine Projektionsfläche (28, 128, 228) zu projizieren.

2. Elektronische Personenwaage (1, 101, 201) nach Anspruch 1, **dadurch gekennzeichnet, dass** die Projektionsmittel (11, 111, 211) mindestens eine Lichtemissionskomponente (12, 112, 212) und eine optische Linse (14, 114, 214) umfassen.

3. Elektronische Personenwaage (1, 101, 201) nach Anspruch 2, **dadurch gekennzeichnet, dass** die Lichtemissionskomponente von mindestens einer Elektrolumineszenzdiode (12, 112, 212) gebildet wird.

4. Elektronische Personenwaage (1, 101, 201) nach Anspruch 2, **dadurch gekennzeichnet, dass** die Lichtemissionskomponente von mindestens einer Laserdiode gebildet wird.

5. Elektronische Personenwaage (1, 101) nach einem der Ansprüche 1 bis 4, **dadurch gekennzeichnet, dass** sich die Projektionsfläche (28, 128) vorne an der Personenwaage (1, 101) in Verlängerung der Platte (2, 102) befindet.

6. Elektronische Personenwaage (1) nach einem der Ansprüche 1 bis 5, **dadurch gekennzeichnet, dass** die Projektionsfläche (28) einem Bildschirm angehört, der in Bezug auf die Platte (2) in eine zur Ebene der Platte parallele Richtung zwischen einer in die Platte (2) eingefahrenen Position und mindestens einer vor die Platte (2) ausgefahrenen Position beweglich ist.

7. Elektronische Personenwaage (1) nach einem der Ansprüche 1 bis 6, **dadurch gekennzeichnet, dass** die Anzeigevorrichtung für das gemessene Gewicht und die Projektionsfläche (28) eine in Bezug auf die Platte (2) in eine Längsrichtung bewegliche Einheit (20) bilden.

8. Elektronische Personenwaage (101) nach einem der Ansprüche 1 bis 5, **dadurch gekennzeichnet, dass** die vorne an der Personenwaage (101) befindliche Projektionsfläche (128) vom Boden (129) gebildet wird.

9. Elektronische Personenwaage (201) nach einem der Ansprüche 1 bis 4, **dadurch gekennzeichnet, dass** sich die Projektionsfläche (228) im Inneren der Platte (202) befindet.

10. Elektronische Personenwaage (201) nach Anspruch 9, **dadurch gekennzeichnet, dass** die Platte (202) einen lichtdurchlässigen Bereich umfasst, der mit einer mattierten Oberfläche (208) versehen ist, und dass die mattierte Oberfläche (208) die Projektionsfläche (228) bildet.

11. Elektronische Personenwaage (1, 101, 201) nach einem der Ansprüche 1 bis 10, **dadurch gekennzeichnet, dass** das Bild des gemessenen Gewichts, das auf die Projektionsfläche (28, 128, 228) projiziert wird, von Zeichen (17) gebildet wird, deren Mindesthöhe zwischen 2 und 5 cm, vorzugsweise 3 cm, beträgt.
